# FASCICULE DE BREVET EUROPEEN

(11) **EP 0 356 359 B1**
(45) Date de publication et mention de la délivrance du brevet: **03.11.1993**
(21) Numéro de dépôt: 89440072.0
(22) Date de dépôt: 12.07.1989
(51) Int. Cl.: B60P 3/08

(54) **Convoi articulé porte-voitures à plateaux porteurs individuels mobiles en mouvements composés**
Gliederkraftfahrzeugtransporter mit einzelnen Ladebrücken, verstellbar in kombinierten Bewegungen
Articulated vehicle-carrying lorry comprising individual loading ramps moving in combined motions

(30) Priorité: 05.08.1988 FR 8810782
(43) Date de publication de la demande: 28.02.1990
(73) Titulaire: LOHR INDUSTRIE S.A., F-67980 Hangenbieten (FR)
(72) Inventeur: André, Jean-Luc, F-67310 Dangolsheim (FR)
(74) Mandataire: Metz, Paul

(56) Documents cités:
- EP-A- 0 241 711
- GB-A- 931 790
- US-A- 3 104 127
- US-A- 3 690 717
- US-A- 4 221 422
- US-A- 4 369 008

## Description

La présente invention se rapporte à un convoi articulé porte-voitures à plateaux individuels porteurs animés de mouvements pré-déterminés en position et en inclinaison permettant de réaliser des phases de chargement et de déchargement automatisées.

Pour des raisons de rentabilité, les propriétaires de véhicules porte-voitures cherchent à profiter de toutes les possibilités de gain dans l'exploitation de leur matériel.

Les méthodes d'organisation et de rationalisation des programmes de transport ne peuvent apporter plus, car on tire déjà parti de tous les avantages d'ordre administratif.

Subsistent les améliorations techniques aux structures porteuses et à leur commande.

Dans ce domaine, il est seulement connu, dans l'état antérieur de la technique (brevet européen EP-A-0 241 711 au nom de la Sté KÄSSBOHRER) un véhicule porte-voitures à deux niveaux, pour lequel une plate-forme supérieure unique, soutenue par deux poteaux avant et deux poteaux arrière, est mobile en hauteur et en inclinaison le long de ces poteaux de soutien.

Cette plate-forme comprend elle-même des plateaux individuels, qui eux, sont mobiles uniquement en pivotement autour d'un axe transversal, par exemple pouvant être abaissé vers l'arrière de manière à pouvoir disposer ainsi trois voitures inclinées sur la plate-forme au lieu de deux seulement.

La présente invention a pour but d'améliorer notablement les performances des convois porte-voitures, notamment sur les deux points fondamentaux suivants.

Il s'agit d'une part de l'amélioration sensible de la capacité de chargement des structures supportant les voitures et d'autre part de la vitesse de mise en place, c'est-à-dire un gain notable en temps sur la durée des phases de chargement et de déchargement.

Selon l'invention, la technique d'imbrication des voitures permet d'augmenter la capacité de transport dans le même gabarit routier autorisé.

En ce qui concerne la rapidité de chargement, la constitution en plateaux de chargement individuellement porteurs et mobiles se succèdant en partie basse pour former une rampe d'accès et la manoeuvre automatique à l' état chargé en mouvements composés jusqu'à occuper une position définitive assurent une mise en place rapide et efficace selon la meilleure disposition possible pour différents types de voitures et de chargements.

La rentabilité est ainsi assurée à l'intérieur des contraintes de la règlementation routière.

En effet, le chargement automatique devient indépendant de la qualité et de la rapidité de l'exécutant.

La présente invention réalise simultanément les objectifs exposés ci-dessus.

A cet effet, elle se rapporte à un convoi articulé porte-voitures à plateaux individuels porteurs mobiles caractérisé en ce que les structures porte-voitures de camion et de remorque sont constituées d'une pluralité d'ensembles unitaires de soutien commandant chacun le déplacement d'un seul plateau à l'aide de deux vis le long des poteaux adjacents, vis sur lesquelles sont montés des blocs reliés mécaniquement à chaque côté de chaque plateau porteur en vue de la réalisation de mouvements composés de ceux-ci en position et en inclinaison, mouvements des différents plateaux coordonnés les uns par rapport aux autres et en ce que les plateaux se succèdent dans une position donnée pour constituer plusieurs rampes d'accès de la plupart des véhicules de l'arrière du convoi jusqu'à leur plateau porteur respectif, permettant ainsi d'effectuer des phases de chargement et de déchargement automatisées.

De nombreux avantages découlent de la présente invention dont on indiquera ci-après les principaux:
. automatisation intégrale possible pour un chargement type répétitif ;
. gain de temps important lors des phases de chargement et de déchargement ;
. suppression de toute erreur humaine ;
. augmentation de rapidité ;
. grande variété possible de mouvements ;
. plus grande sécurité pour les voitures transportées et pour l'utilisateur pendant les phases de chargement et de déchargement.

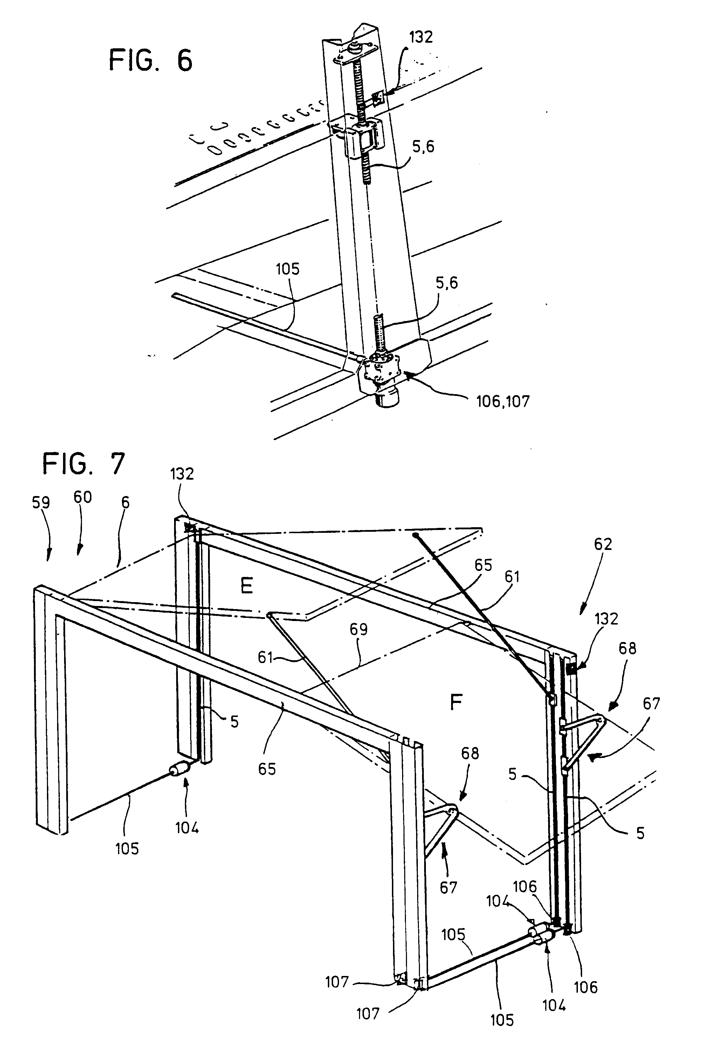

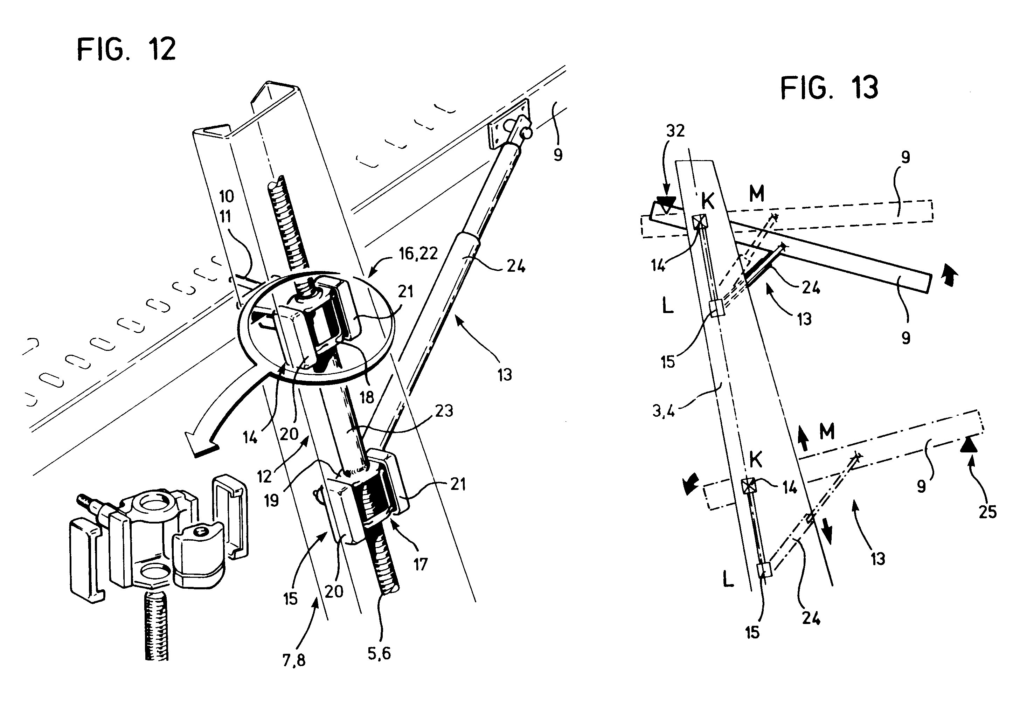

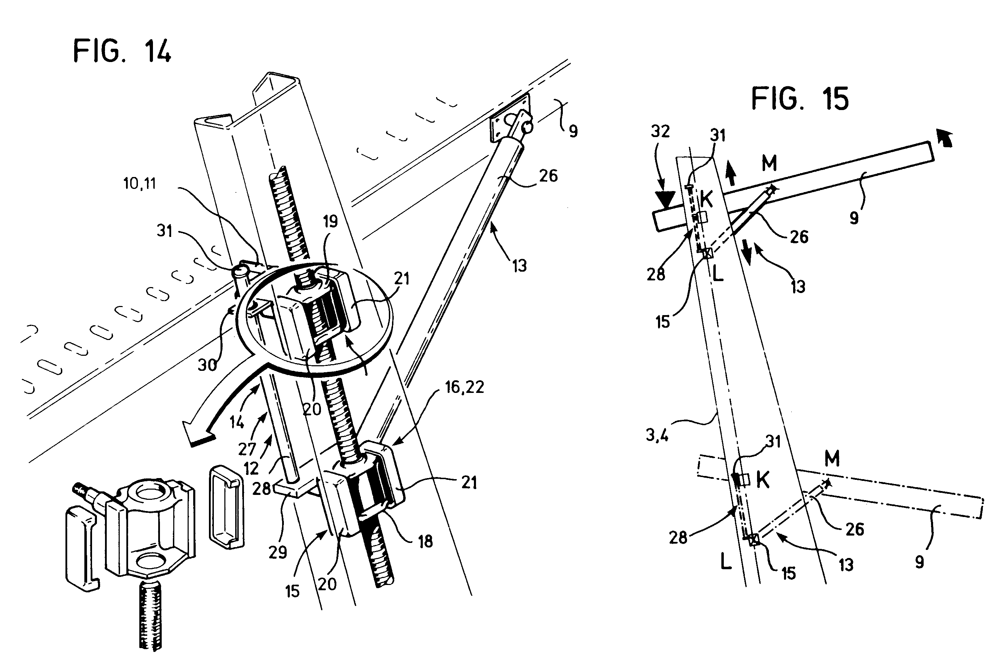

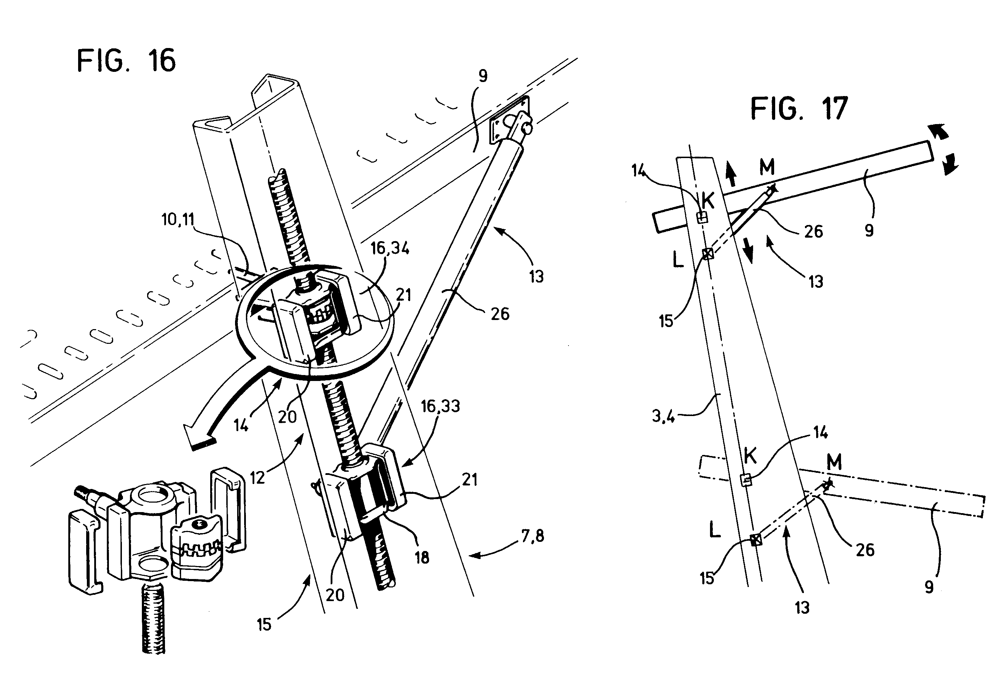

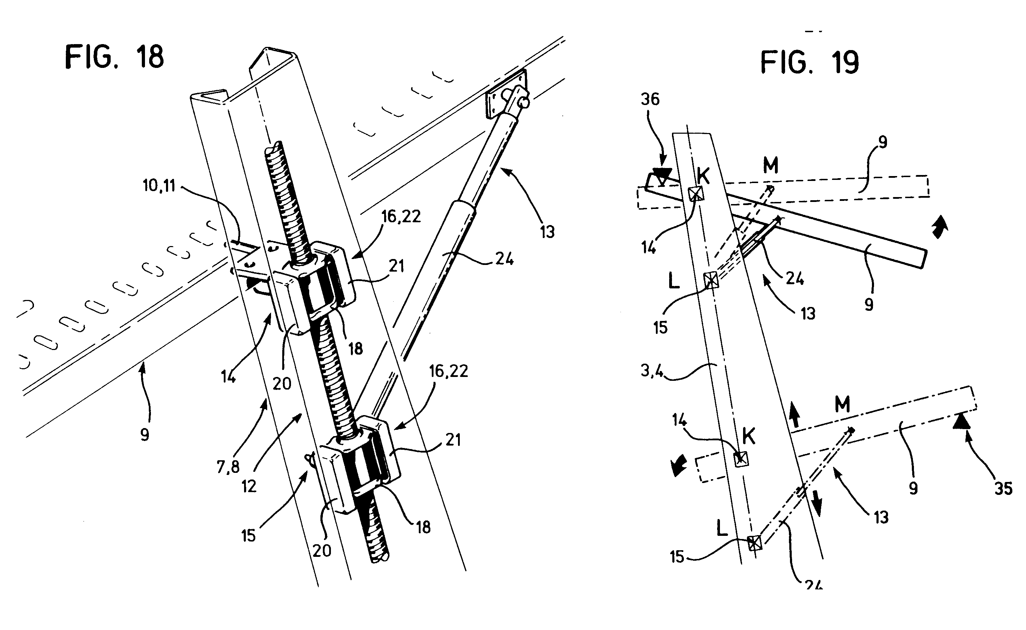

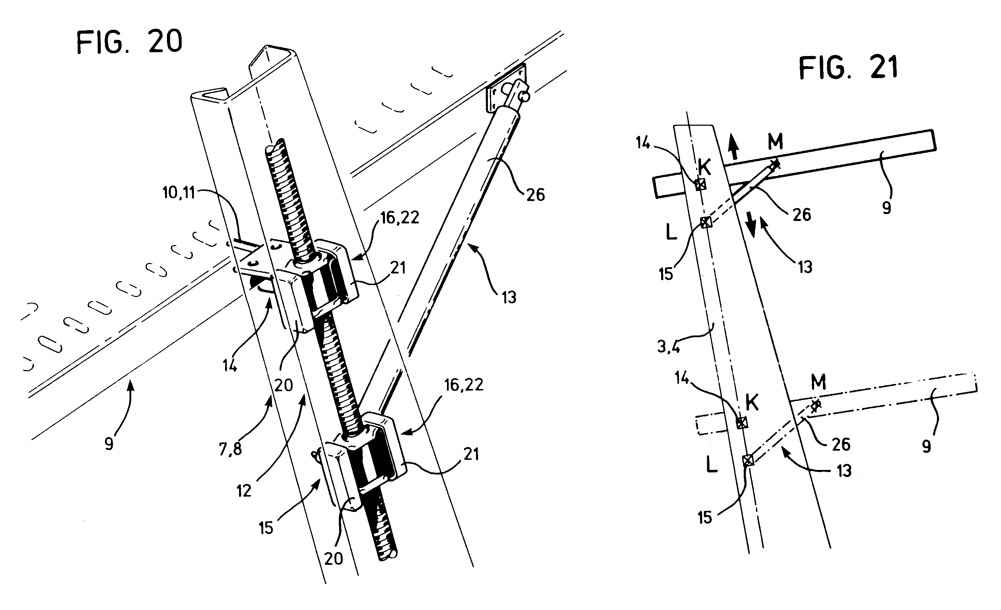

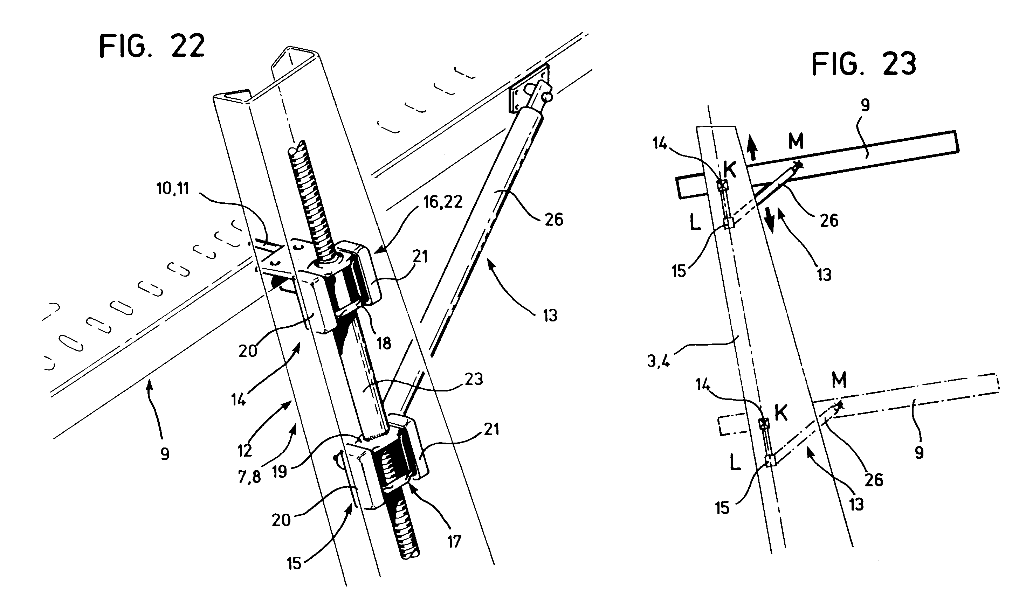

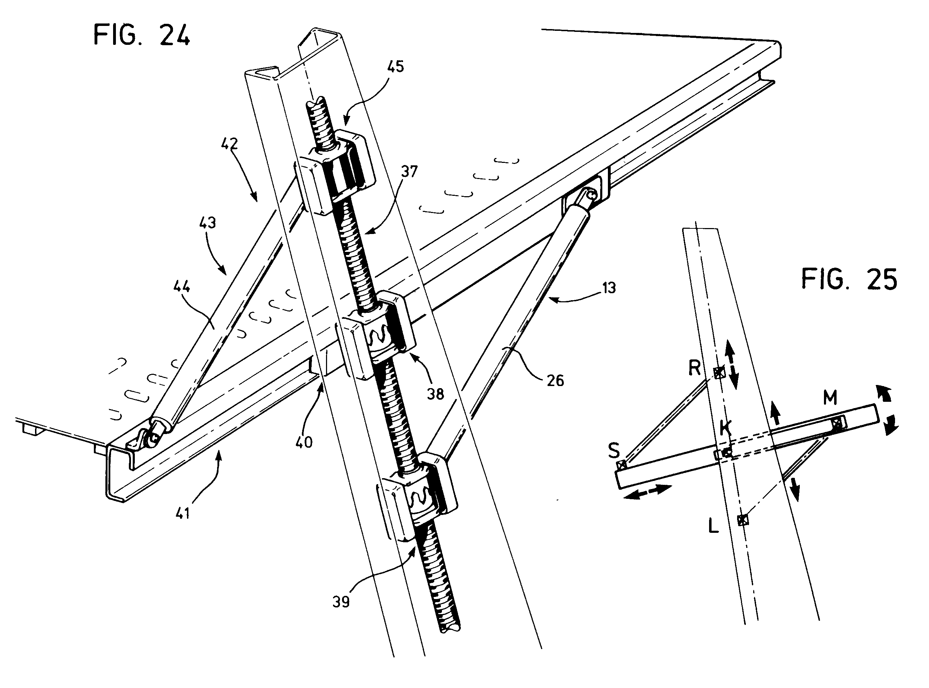

L'invention sera bien comprise à la lecture de la description ci-après effectuée à titre d'exemple non limitatif sur deux variantes d'exécution en référence aux dessins annexés dans lesquels :
- la figure 1 est une vue générale en perspective illustrant un exemple de convoi porte-voitures conforme à l'invention montrant les plateaux individuels porteurs en position d'alignement selon une rampe d'accès;
- les figures 2 et 3 sont des vues en perspective du véhicule porteur-remorqueur respectivement dans les configurations de plateaux relevés puis alignés en position de rampe d'accès;

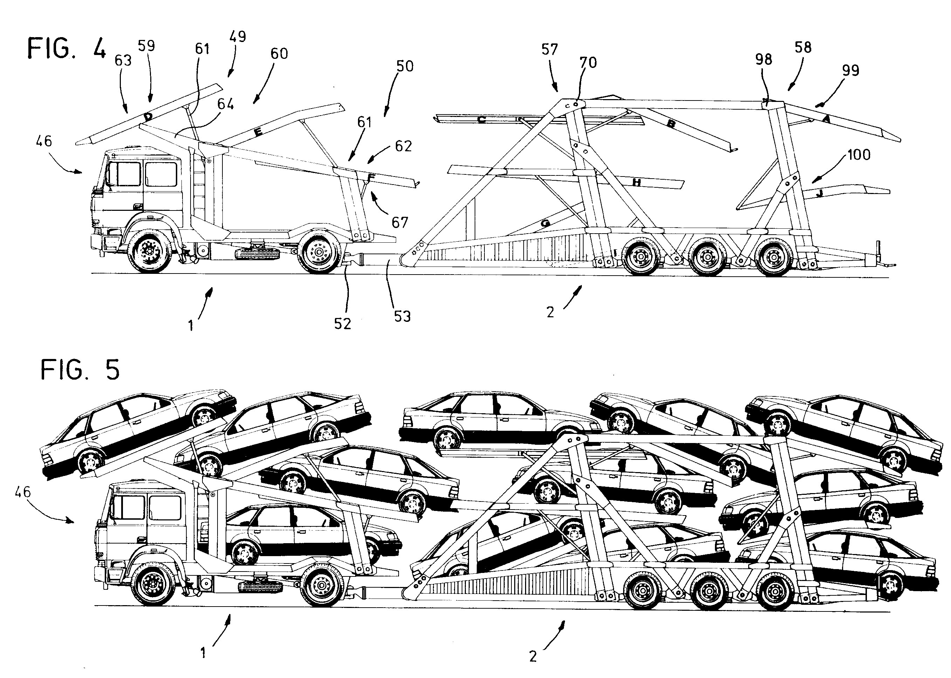

- la figure 4 est une vue générale de profil d'un exemple de convoi porte-voitures non chargé, selon une variante perfectionnée, de celui représenté sur la figure 1 ;
- la figure 5 est une vue générale de profil de l'exemple de convoi porte-voitures chargé conforme à celui représenté sur la figure 4 ;
- les figures de 6 à 9 sont des représentations schématiques en perspective à plus grande échelle des parties suivantes se trouvant sur le convoi représenté sur les figures 4 et 5 :
   . figure 6 exemple d'un poteau de châssis avec boîtier de renvoi du mouvement moteur de déplacement du plateau,
   . figure 7 partie supérieure de la structure porteuse de camion,
   . figure 8 ensemble porteur de remorque d'un plateau mobile articulé sur deux poteaux inclinés,
   . figure 9 structure générale de l'ensemble porteur composite avant de remorque vu de profil,

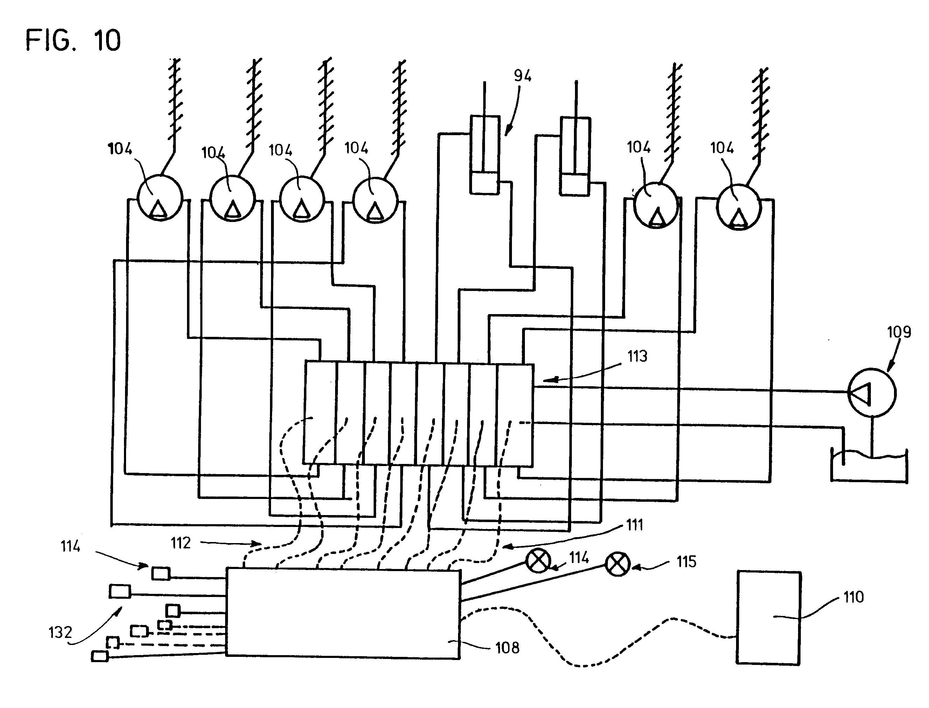

- la figure 10 est le schéma hydraulique d'un exemple à commandes centralisées à partir d'un automate,

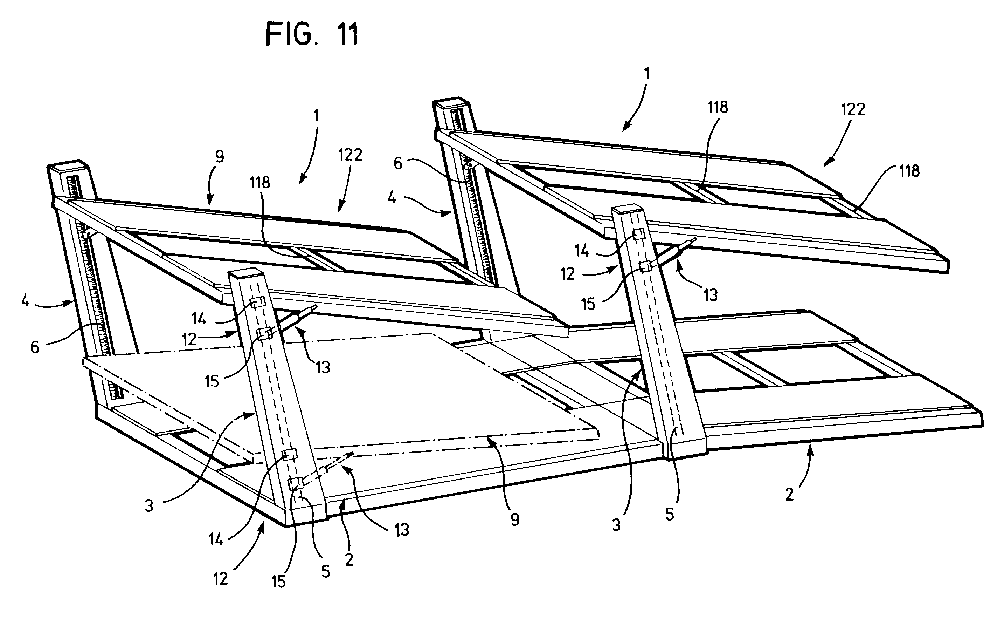

- la figure 11 est une vue schématique en perspective montrant deux ensembles porteurs simples à un seul plateau dont l'un des deux est représenté aussi en position basse en traits pointillés;
- les figures de 12 à 25 sont des vues en perspective et leurs schémas simplifiés correspondante montrant quelques exemples de mécanismes de déplacement des plateaux en mouvements composés le long de vis intérieures aux poteaux de soutien avec représentation schématique des positions extrêmes correspondantes des plateaux :
   . figure 12 : écrou supérieur relié rigidement à une douille de translation inférieure et bielle de longueur variable,
   . figure 13 : schéma correspondant,
   . figure 14 : douille de translation supérieure, écrou inférieur et bielle de longueur fixe,
   . figure 15 : schéma correspondant,
   . figure 16 : écrou débrayable supérieur, écrou simple inférieur et bielle de longueur fixe,
   . figure 17 : schéma correspondant,
   . figure 18 : écrous supérieur et inférieur et bielle de longueur variable,
   . figure 19 : schéma correspondant,
   . figure 20 : écrous supérieur et inférieur et bielle de longueur fixe,
   . figure 21 : schéma correspondant,
   . figure 22 : écrou supérieur relié rigidement à une douille de translation inférieure et bielle de longueur fixe,
   . figure 23 : schéma correspondant,
   . figure 24 : écrous débrayables supérieur et inférieur, bielle de longueur fixe avec mécanisme de translation à écrou simple et bielle de longueur fixe,
   . figure 25 : schéma correspondant,

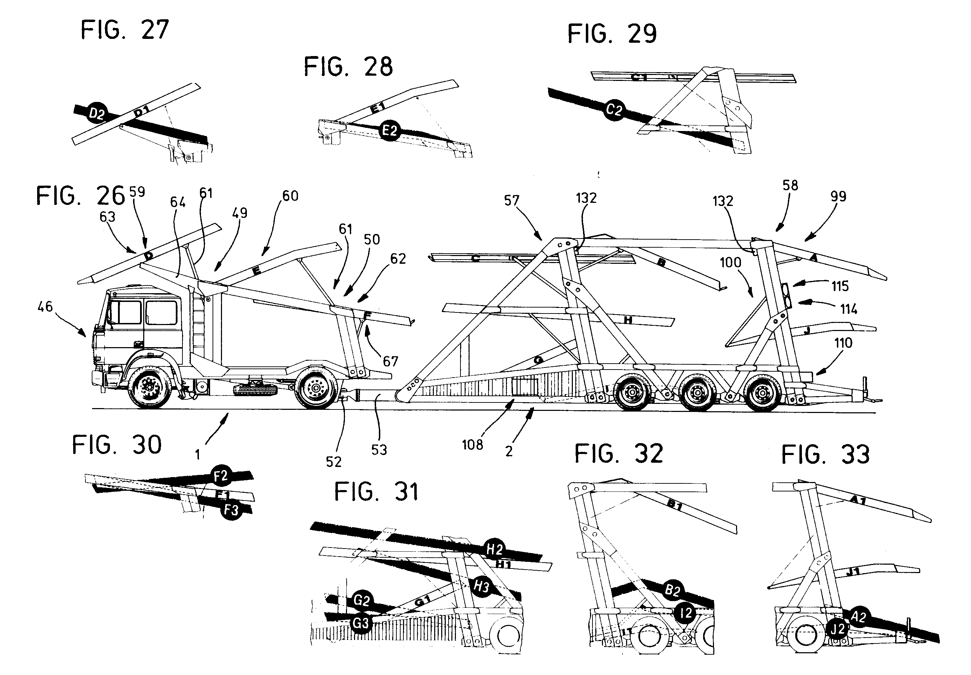

- la figure 26 est une vue composite illustrant, vu de profil dans sa totalité, le convoi non chargé éclaté en zones de détail au niveau des plateaux selon les figures suivantes pour montrer les mouvements des différents plateaux lors des phases de chargement et de déchargement, figures sur lesquelles les positions intermédiaires des plateaux sont représentées en zones noires :
   . figure 27 plateau D supérieur de camion,
   . figure 28 plateau E supérieur médian de camion,
   . figure 29 plateau C supérieur avant de remorque,
   . figure 30 plateau F supérieur arrière de camion,
   . figure 31 plateau H intermédiaire avant de remorque et plateau G inférieur avant de remorque,
   . figure 32 plateau B supérieur médian de remorque et plateau I inférieur médian de remorque,
   . figure 33 plateau A supérieur arrière de remorque et plateau J intermédiaire médian de remorque,
- les figures de 34 à 45 sont des vues schématiques de profil illustratives du fonctionnement depuis le chargement de la première voiture jusqu'à la mise en place de la dernière voiture sur le plateau inférieur arrière de la remorque dans le cas d'un exemple de mécanismes à douilles et à bielles télescopiques.

La présente invention concerne l'association d'une pluralité d'ensembles unitaires porteurs à un seul plateau individuel porteur par ensemble, ceux-ci étant disposés sur une même ligne de poteaux de châssis ou sur des lignes successives et différentes de manière à constituer une unité roulante fonctionnelle complète du type convoi porte-voitures permettant des phases de chargement et de déchargement entièrement automatisées.

En effet, comme on le verra ci-après, le convoi porte-voitures permet notamment de constituer avec les plateaux individuels en correspondance une véritable rampe d'accès inclinée d'un bout à l'autre du convoi. La voiture à charger en extrémité avant du camion peut ainsi venir par ses propres moyens se mettre en place par le chemin le plus court.

Le convoi se compose d'un camion porteur-remorqueur 1 et d'une remorque 2 de type quelconque, à rond d'avant train, à essieux centraux ou autres. Dans la version décrite ci-après, il s'agira d'une remorque équilibrée à trois essieux ou trains de roulage centraux.

Le camion et la remorque sont équipés de structures porte-voitures constituées d'ensembles unitaires porteurs ou dits de soutien, simples ou doubles reliés entre eux par des éléments mécaniques de carrosserie pour la rigidification et la stabilisation de l'ensemble.

On décrira tout d'abord ci-après, de façon non exhaustive les différentes catégories d'ensembles porteurs et les mécanismes de déplacement des plateaux.

On réalise un ensemble unitaire porteur en solidarisant au châssis de camion ou de remorque deux poteaux de soutien 3 et 4 parallèles entre eux et verticaux ou légèrement inclinés. Chaque poteau de soutien renferme au moins une vis telle que 5 ou 6 sur laquelle est monté un mécanisme de liaison et porteur et, plus particulièrement, un dispositif de translation 7 ou 8.

La vis est unique par poteau et actionnée par une force motrice unique propre à chaque plateau lui-même associé à son mécanisme de liaison et porteur.

Les deux dispositifs de translation 7 et 8 assurent la liaison de soutien à pivotement et, le cas échéant, à pivotement-coulissement avec un plateau mobile porteur type tel que 9, de forme classique ou de caractéristiques particulières par l'intermédiaire d'un axe de pivotement 10 ou 11 associé, le cas échéant, à un bloc de coulissement.

Le plateau mobile 9 est susceptible de mouvements composés en inclinaison et en déplacement par rapport aux poteaux longitudinalement et transversalement à ceux-ci par la seule commande en actionnement simultané des vis 5 et 6 à partir de la seule et unique force motrice, par exemple un moteur hydraulique ou électrique doublé d'un actionnement manuel de secours.

L'emplacement exact de l'axe de pivotement 10 ou 11 du plateau avec le dispositif de translation et de pivotement correspondant 7 ou 8 importe peu dans la mesure où celui-ci ne conditionne pas la nature des mouvements.

Avant de décrire en détail chaque ensemble porteur formant l'exemple de convoi porte-voitures choisi à titre illustratif pour cette invention, il convient de décrire le dispositif de translation et de pivotement de base dans sa généralité puis quelques unes de ses variantes et modes de réalisation en référence aux figures de 12 à 25.

Celui-ci se compose d'un ensemble mobile de translation 12 le long de la vis correspondante et porté par celle-ci ainsi qu'une liaison articulée inclinée 13 reliant le plateau à l'ensemble mobile.

L'ensemble mobile de translation 12 est constitué d'un bloc supérieur 14 et d'un bloc inférieur 15 montés sur la même et unique vis 5 ou 6 par poteau et par plateau. Le bloc supérieur 14 assure la liaison à pivotement avec le plateau et le bloc inférieur assure l'articulation de pivotement avec une extrémité de la liaison articulée inclinée 13 afin de réaliser un ensemble triangulaire articulé à trois points de pivotement.

Pour des raisons de clarté, les trois points d'articulation seront désignés par les lettres K, L, M se rapportant respectivement aux points situés sur les blocs 14 et 15 et sur le plateau à l'extrémité de la liaison inclinée 13.

La présente invention couvre les différentes variantes de mécanismes de liaison et porteurs, représentés sur les figures de 12 à 25. Il s'agit des variantes suivantes :
- - figures 12 et 13 :: KL de longueur constante
LM de longueur variable
permettant tous les mouvements de translation et de pivotement du plateau ;
- - figures 14 et 15 :: KL de longueur constante
LM de longueur constante
permettant tous les mouvements de translation et de pivotement du plateau ;
- - figures 16 et 17 :: KL de longueur constante
LM de longueur constante
permettant tous les mouvements de translation et de pivotement du plateau ;
- - figures 18 et 19 :: KL de longueur constante
LM de longueur variable
permettant tous les mouvements de translation et de pivotement du plateau ;
- - figures 20 et 21 :: KL de longueur constante
LM de longueur constante
permettant un simple déplacement parallèle du plateau;
- - figures 22 et 23 :: KL de longueur constante
LM de longueur constante
permettant un simple déplacement parallèle du plateau;
- - figures 24 et 25 :: KL de longueur variable
LM de longueur constante
associés à un mécanisme de coulissement du plateau, permettant tous les mouvements souhaités du plateau par rapport à un axe horizontal.

Comme on le verra ci-après, selon les variantes, les blocs 14 et 15 seront de constitution différentes de manière à permettre la variation de distance entre K et L et, le cas échéant, la variation de longueur de la liaison LM.

Selon le cas, les éléments portés par les vis sont des écrous 16 en prise permanente ou sélective avec la vis ou des douilles de coulissement 17.

Les cages telles que 18 et 19 respectivement des écrous et des douilles sont habillées latéralement de patins 20 et 21 coulissant le long des poteaux 3 et 4 afin d'assurer l'immobilisation de l'écrou en rotation sur lui-même puis le guidage et la stabilité des mouvements longitudinaux.

Selon le mode de réalisation de la figure 12, le bloc supérieur 14 est un écrou 22 en prise permanente avec la vis. La cage 18 de celui-ci est reliée de façon rigide par un tube 23 à la cage 19 du bloc inférieur. Ce dernier est une douille de coulissement 17 traversée par la vis. Ainsi, la distance KL est maintenue mécaniquement constante.

La cage 19 de la douille 17 porte l'articulation B de la liaison inclinée 13. Celle-ci, selon ce mode d'exécution, est extensible, réalisée par exemple sous la forme d'une bielle télescopique 24 ou par un vérin qui en constitue un équivalent fonctionnel.

La rotation sur la vis agit sur l'écrou 22 qui se déplace par translation vers le haut ou vers le bas entraînant dans ses mouvements le long du poteau correspondant la douille de coulissement 17 de par son assujettissement avec elle par le tube 23.

La distance KL restant constante, les mouvements d'inclinaison sont réalisés par l'extension ou le retrait de la bielle télescopique 24 qui peut être une bielle active, vérin ou autre, ou par le jeu d'une butée inférieure 25 disposée en partie basse en extrémité du plateau pour déterminer une inclinaison de fin de course basse, par exemple une inclinaison correspondant à la position de chargement du véhicule.

Le poids du véhicule chargé amènera automatiquement la bielle en position rétractée c'est-à-dire la distance LM à sa valeur minimale après une phase intermédiaire de levage au cours de laquelle le plateau s'incline vers le bas.

Dans les modes de réalisation des figures de 14 à 17, la liaison inclinée 13 correspond à une distance LM constante réalisée par exemple sous la forme d'une bielle rigide 26 c'est-à-dire de longueur fixe.

Les variations d'inclinaison sont données par les augmentations ou les diminutions de la distance KL réalisées selon deux façons différentes correspondant aux variantes représentées sur les figures 14, 15 et 16, 17.

La première variante comporte les mêmes blocs, écrou 22 et douille de coulissement 17, que celle précédemment décrite.

Selon un mode préféré, la disposition est inverse : écrou 22 en position inférieure et douille de coulissement 17 en position supérieure.

On établit simplement une liaison extérieure 27 de butée sous la forme, par exemple, d'une tige rigide 28 solidarisée à l'une de ses extrémités à la cage 18 de l'écrou 22 par l'intermédiaire d'une platine 29 de raccordement et guidée à coulissement par une patte 30 solidaire de la cage 19 de la douille de coulissement 17 ou tout autre moyen équivalent, par exemple une chaîne ou un câble.

Afin de limiter l'écartement des deux blocs, on prévoit une butée, par exemple un renflement 31 en extrémité de tige 28 ou tout autre moyen.

En fonctionnement, la distance KL s'établit à sa valeur maximale par le poids du plateau à vide ou chargé se répercutant par le jeu du couple de pivotement sur la douille en position supérieure, provoquant la remontée corrélative de celle-ci le long de la vis sur une distance se terminant à la butée d'extrémité 31 de la tige 28 déterminant ainsi l'inclinaison du plateau dans sa position extrême basse.

Cette inclinaison se maintient en phase de montée-levage jusqu'à la position de fin de course haute du plateau par le jeu d'un point haut d'appui, par exemple une butée 32, contre laquelle vient porter l'extrémité de la face supérieure du plateau pour le faire basculer vers le haut, ( comme représenté par les flèches ), par l'effet du couple résultant de la poussée vers le haut de l'écrou inférieur.

La variante représentée sur les figures 16 et 17 procure les mêmes effets sans nécessiter la présence d'une butée de basculement en position haute.

Elle comporte un bloc inférieur 15 sous la forme d'un écrou 33 analogue à l'écrou 22 en prise permanente sur la vis. Le bloc supérieur est un écrou débrayable 34 connu, par exemple du type de celui imaginé et protégé par le déposant.

Cet écrou débrayable 34 permet une prise sélective de l'écrou sur la vis à partir d'une commande extérieure de libération ou de mise en prise. Ainsi, en agissant simplement sur cette commande, on peut, par mise en prise ou libération, faire varier la distance KL pendant la rotation de la vis et déterminer ainsi l'inclinaison du plateau.

En réalité, seules les inclinaisons de fin de course haute et basse sont exploitées dans l'utilisation en porte-véhicules. En effet, l'inclinaison de position basse correspond au chargement c'est-à-dire à la montée du véhicule sur le plateau et l'inclinaison de position haute à la présentation du véhicule lors du transport.

Il suffit alors de programmer la commande de l'écrou débrayable avant l'arrivée dans ces positions extrêmes, haute et basse, pour que l'inclinaison se trouve à sa valeur prédéterminée en fin de course haute et basse.

Une autre variante représentée sur les figures 18 et 19 présente des blocs, supérieur 14 et inférieur 15, identiques réalisés sous la forme d'écrous tels que ceux référencés 22. La liaison inclinée 13 est de longueur variable sous la forme d'une bielle télescopique, par exemple celle déjà référencée 24 ou d'un vérin.

Ces écrous, de pas identique, entraînés par la même vis, se déplacent à distance constante l'un de autre. KL reste donc de longueur constante.

LM étant variable, on retrouve une configuration de fonctionnement en position du plateau, analogue à celle de la première variante. Les mouvements en inclinaison du plateau sont réalisés par l'extension ou le retrait de la bielle télescopique 24 ou de son vérin de remplacement.

Ainsi, en position basse le contact avec une butée basse 35 débute l'inclinaison et c'est la longueur d'extension de la bielle qui détermine l'amplitude de l'inclinaison et la présentation finale de fin de course basse du plateau correspondant à la position de chargement du véhicule.

Comme pour la première variante, le poids du véhicule chargé amènera automatiquement la bielle télescopique en position rétractée vers le bas c'est-à-dire la distance KL à sa valeur minimale après la poursuite d'un premier déplacement de levage qui soulèvera le plateau de son appui bas de butée.

Le plateau s'inclinera d'autant pour garder cette inclinaison jusqu'en position haute de fin de course où une éventuelle deuxième butée 36 représentée en pointillés pourra relever le plateau par basculement.

Les variantes représentées sur les figures 20, 21, 22 et 23 sont des variantes simplifiées qui ne permettent qu'une translation à inclinaison fixe.

En effet, selon ces variantes, les deux blocs, supérieur 14 et inférieur 15, sont soit identiques, réalisés sous la forme d'écrous tels que ceux déjà référencés 22, soit différents, reliés par un tube rigide, par exemple celui déjà référencé 23. La liaison inclinée 13 présente chaque fois une bielle de longueur fixe 26.

Les écrous, de pas identique, entraînés par la même vis, se déplacent à distance constante l'un de l'autre, KL et LM restant de longueur constante, les mouvements de la vis engendrent un déplacement longitudinal d'ensemble en translation le long des poteaux.

De même, le tube 23 assujettit les blocs 14 et 15 à rester à une distance constante l'un de l'autre.

On a représenté sur les figures 24 et 25 une variante disposant d'un mécanisme supplémentaire de translation 37.

Cette variante procède du même concept général inventif selon lequel les mouvements du plateau porteur sont obtenus à partir d'une vis unique par poteau, vis entraînée en rotation par une force motrice unique.

Ainsi, selon cette variante, on obtient en plus des mouvements de déplacement du plateau transversalement aux poteaux porteurs.

Selon cette variante, les blocs, supérieur 14 et inférieur 15, sont réalisés sous la forme de deux écrous débrayables 38 et 39.

La liaison articulée 13 est une bielle de longueur fixe telle que celle déjà référencée 26.

La liaison porteuse entre le plateau et le poteau est du type à pivotement-coulissement par l'intermédiaire d'un coulisseau ou d'un patin 40 sur lequel se déplace un profilé de bordure 41 du plateau.

L'ensemble est complété par un mécanisme de coulissement 42 réalisé par une liaison articulée 43 sous la forme d'une bielle inclinée 44 articulée d'une part sur le plateau et d'autre part sur un bloc, par exemple, un écrou supérieur 45 analogue à ceux déjà décrits, établissant ainsi une triangulation supplémentaire référencée RKS, R étant l'articulation avec la vis et S avec le plateau.

Les mouvements en inclinaison et en déplacement du plateau le long des poteaux porteurs en regard résultent des commandes sélectives de mise en prise ou de débrayage des écrous débrayables 38 et 39.

Pour des raisons de programmation et de coordination des mouvements, on a assujetti directement les mouvements de coulissement du plateau à ceux de la vis par l'intermédiaire de l'écrou 45 et de la liaison articulée 43 de longueur constante.

La présence d'écrous débrayables permet d'obtenir et de sélectionner isolément tous les mouvements possibles du plateau :
. déplacement parallèle seul lorsque tous les écrous sont en prise;
. pivotement seul lorsque l'écrou inférieur est seul en prise;
. Coulissement seul lorsque les deux débrayables sont hors prise.

De plus, en jouant sur les commandes individuelles, on peut réaliser toutes les combinaisons des mouvements précédents.

Bien entendu, d'autres modes de fonctionnement s'avèrent possibles en substituant à l'écrou 45 les divers blocs examinés : douille de translation, écrou débrayable, et à la liaison 43 une bielle téléscopique ou un vérin constituant son équivalent fonctionnel.

La présente invention consiste à associer les différents ensembles porteurs unitaires décrits ci-dessus pour former un convoi articulé porte-voitures d'un nouveau type.

Le camion 1 comporte une cabine 46 et un châssis 47 équipé d'une structure porte-voitures 48 capable de recevoir et de porter quatre voitures. Cette structure comprend un ensemble unitaire porteur double avant 49, par exemple, à deux plateaux et un ensemble unitaire porteur double arrière 50, ainsi qu'un plan porteur inférieur 51.

Le camion possède, à l'arrière, un support de crochet d'attelage 52 le reliant de façon articulée par un timon 53 à la remorque 2.

La remorque 2 comporte, portée par ses trains de roulage, un châssis 54 prolongé par une structure porte-voitures 55 multi-éléments. Cette dernière se compose d'un soubassement en plan porteur inférieur 56 formé par la succession des plateaux inférieurs et de deux ensembles porteurs à plateaux individuels dont un ensemble composite avant 57 et un ensemble arrière 58 permettant de recevoir et de porter jusqu'à huit voitures.

Chaque ensemble porteur présente des particularités. On les examinera individuellement par des descriptions séparées.

Au préalable, il convient de référencer les plateaux individuels mobiles portés par ces ensembles.

On adoptera ci-après les références A, B, C,...,I, J, affectées comme suit :
A plateau supérieur arrière de remorque,
B plateau supérieur médian de remorque,
C plateau supérieur avant de remorque,
D plateau supérieur avant de camion,
E plateau supérieur médian de camion,
F plateau supérieur arrière de camion,
G plateau inférieur avant de remorque,
H plateau intermédiaire avant de remorque,
I plateau inférieur médian de remorque,
J plateau intermédiaire arrière de remorque;

L'ensemble unitaire double avant 49 de camion se compose de deux ensembles unitaires de soutien avant de camion 59 et 60 qui actionnent le plateau D et partiellement le plateau F.

La carrosserie de camion se termine par l'ensemble double arrière 50 se composant de deux ensembles unitaires de soutien arrière 61 et 62 actionnant respectivement les plateaux E et F en mouvements de basculement-pivotement.

Le premier ensemble 59 actionnant le plateau D est un mécanisme à simple écrou en raison du simple mouvement nécessaire de pivotement de ce plateau. Ce dernier présente un axe de pivotement 63 à environ mi-longueur, porté par une prolongation 64 d'un élément supérieur de liaison 65 entre les poteaux avant et arrière.

Le plateau E est monté basculant sur le deuxième ensemble de soutien 60 par un mécanisme à simple écrou en prise sur la vis correspondante et par l'intermédiaire d'une bielle de longueur constante 66 articulée sur le premier ensemble unitaire de soutien 61 de poteau arrière. Le basculement est ainsi obtenu à inclinaison et à profondeur variables.

Le plateau F nécessite des variations d'inclinaisons. Il est relié par deux écrous montés sur les vis des poteaux du deuxième ensemble de soutien arrière 62 par une liaison à basculement à triangle indéformable 67 dont le sommet constitue une articulation 68 se déplaçant à glissement le long des bords du plateau F. Les extrémités de ce plateau sont montées sur un axe fixe de pivotement 69 s'appuyant sur la liaison mécanique fixe supérieure 65 reliant les poteaux.

Selon une variante, cet axe de pivotement 69 peut être rendu déplaçable le long du plateau F ou le long de la liaison mécanique 65 à l'aide, par exemple, de vérins.

L'ensemble composite avant 57 de remorque est un regroupement de plusieurs ensembles unitaires de soutien se développant autour d'un double poteau avant 70 composé de deux poteaux avant 71 et 72 juxtaposés.

Plus précisément, il regroupe quatre ensembles unitaires de soutien dont un premier groupe de deux ensembles supérieurs de translation 73 et de pivotement 74 manoeuvrés à partir du double poteau avant 70 et d'un deuxième groupe à ensembles commandés séparément.

Il s'agit, pour le premier groupe, de l'ensemble de translation 73 et de l'ensemble de pivotement 74 commandant respectivement les plateaux C et B.

Il s'agit, pour le deuxième groupe, d'un ensemble basculant 75 commandant les mouvements du plateau intermédiaire H et d'un ensemble inférieur 76 montés sur des éléments 77 de châssis et qui commandent les mouvements du plateau inférieur G. Ces plateaux sont articulés l'un et l'autre d'une part sur un poteau oblique antérieur 78 et d'autre part, pour le plateau H sur un poteau oblique postérieur 79, et pour le plateau G sur un point d'appui de pivotement 80.

Le premier groupe vise les plateaux supérieurs C et B confrontés aux impératifs de la hauteur maximale autorisée pour un chargement routier. Pour satisfaire ces impératifs, les voitures doivent être placées horizontales ou inclinées.

Pour le plateau C, il s'agit d'une position finale supérieure horizontale par rapport à une position inclinée dite de chargement correspondant à la montée et à l'immobilisation de la voiture sur le plateau.

Ainsi, pour les besoins du chargement, le plateau C doit pouvoir s'incliner pour venir se placer au-dessus du plateau H en le recouvrant partiellement puis monter et se redresser à l'horizontale et inversement.

Il est animé de mouvements de translation et de mouvements composés d'inclinaison-basculement par butée contre le plateau H voisin.

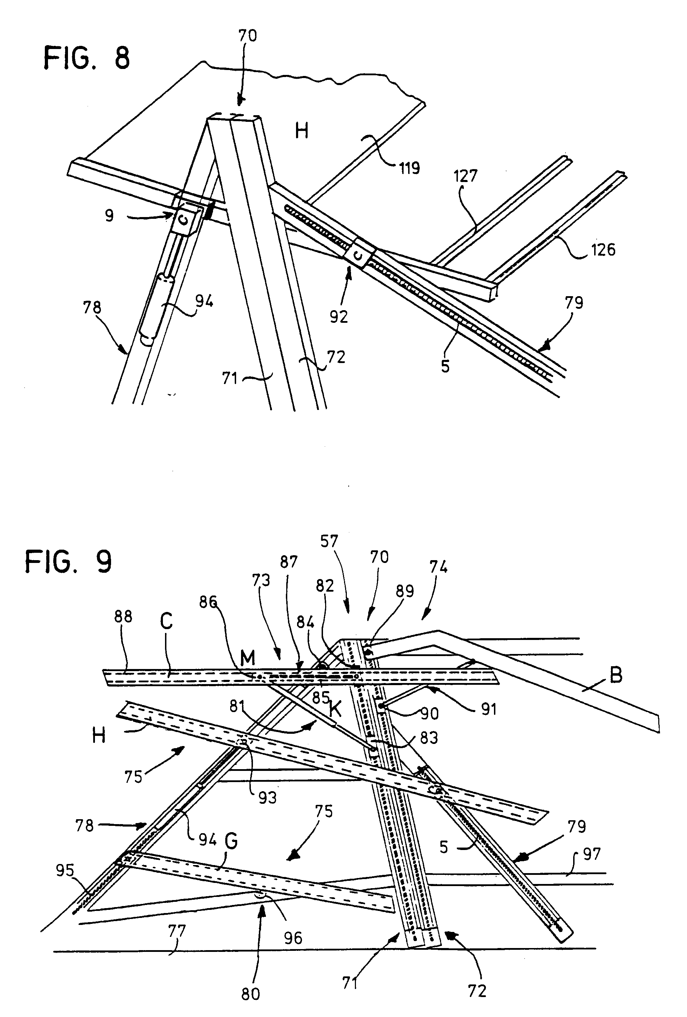

Pour ce faire, en référence à la figure 9, le plateau C est monté articulé d'une part sur le premier poteau avant 70 selon un dispositif mobile de translation du type à bielle télescopique 81 et à deux écrous 82 et 83 fonctionnant à l'aide d'une butée d'extrémité, dispositif conforme à celui représenté sur les figures 18 et 19 et articulé d'autre part sur le poteau oblique antérieur 78.

La liaison articulée du plateau C sur le poteau oblique antérieur 78 s'effectue par un axe de pivotement sur une pièce de translation 84 déplaçable par coulissement le long dudit poteau oblique antérieur.

Pour les besoins en mouvements de translation longitudinale du plateau C, le dispositif de translation à deux écrous 82 et 83 en prise sur une vis, par exemple 5, et à bielle télescopique 81 diffère légèrement de l'exemple type décrit ci-dessus en ce que la liaison référencée KM du triangle KLM est maintenue de longueur constante. Ceci par un lien mécanique 85 souple ou rigide de longueur constante qui forme avec la pièce 86 d'articulation de la bielle 81 sur le plateau C et l'écrou supérieur 82 un coulisseau 87 susceptible de mouvements de translation le long d'une glissière 88 prévue le long du bord longitudinal du plateau C.

On dispose ainsi sur chaque côté de la remorque de quatre points d'articulation à pivotement permettant par la seule force motrice de rotation de la vis 5 du premier poteau avant, de mettre en oeuvre tous les mouvements nécessaires au chargement et au déchargement du et par le plateau C.

La liaison articulée sur le poteau oblique antérieur 78 s'avère nécessaire. Elle présente le double but d'un guidage et d'un appui mécanique mobile supplémentaire.

Pour des raisons de clarté, on décrira maintenant le fonctionnement propre et les différents mouvements du plateau C.

Le plateau C se déplace entre une position horizontale supérieure et une position inclinée inférieure dans laquelle il se trouve parallèle au plateau H en contact de recouvrement partiel avec celui-ci. De sa position haute horizontale, on amène le plateau C en position inclinée inférieure par la seule action sur la vis de poteau qui force les écrous en mouvement vers le bas entraînant simultanément le plateau en translation verticale vers le bas. Au cours de ce mouvement, l'appui-guidage le long du poteau oblique antérieur par la pièce de translation 84 provoque le déplacement longitudinal du plateau sur le coulisseau 87. Dès contact de butée avec le plateau H, le mouvement de translation se transforme en mouvement de pivotement-basculement par déplacement du plateau sur le coulisseau 87 et allongement de la bielle télescopique 81 au fur et à mesure de la descente supplémentaire des écrous 82 et 83 jusqu'à contact complet de recouvrement du plateau C avec le plateau H.

Le mouvement de relevage s'effectue par action inverse sur la vis de poteau et mouvements inverses du plateau et de ses différents organes ou éléments mobiles.

La position parallèle de chevauchement-appui du plateau C sur le plateau H permet son chargement par une voiture via le plan incliné formé par la succession des plateaux adjacents H, I et J en position de continuité coplanaire c'est-à-dire de rampe d'accès.

Le plateau B est un simple plateau incliné, à déplacement de translation apporté par deux écrous simples 89 et 90 en prise sur la vis correspondante, par exemple la vis 5 du deuxième poteau avant 72, et une bielle de longueur fixe 91. Son inclinaison d'origine et permanente est donnée par sa forme générale en " V ".

Le plateau H est articulé par un écrou 92 sur une vis motrice, par exemple 5, prévue dans le poteau oblique postérieur 79 alors que l'autre liaison articulée est appui de pivotement sur une pièce de translation 93 coulissant à l'intérieur du poteau oblique antérieur 78 à l'extrémité d'un vérin d'inclinaison 94. Les mouvements sont de basculement résultant des deux poussées en inclinaison provenant du vérin 94 et de l'écrou 92 selon les séquences de commande du programme de fonctionnement.

Une des deux articulations de liaison du plateau H avec l'un ou l'autre poteau oblique est réalisée coulissante le long de ce plateau.

Le plateau G est simplement articulé en extrémité sur une vis motrice 95 du poteau oblique antérieur 78 et repose sur le point de pivotement 80 situé à environ mi-longueur de manière à provoquer une butée de basculement 96. Ce point de pivotement est, par exemple, mobile le long d'un longeron bas de liaison 97 prévu dans la structure porteuse de remorque.

Cet ensemble composite assure aux plateaux concernés les libertés de mouvements suffisantes pour s'intégrer parfaitement dans le processus automatisé des phases de chargement et de déchargement.

L'ensemble de soutien arrière 58 de remorque est à double poteau arrière 98 se décomposant en un ensemble de translation arrière 99 pour le plateau A et un ensemble de basculement arrière 100 pour le plateau J contenant chacun un mécanisme de déplacement, d'une part, pour le plateau A en mouvements de translation verticale à inclinaison constante par l'intermédiaire de deux écrous simples et d'une bielle de longueur constante, moyens tels que ceux décrits ci-dessus, et d'autre part, pour le plateau intermédiaire J en mouvements de léger basculement vers l'avant lors de sa montée provenant d'une liaison au poteau par un écrou et une bielle de longueur constante, moyens tels que ceux décrits ci-dessus en référence aux figures 14 et 15.

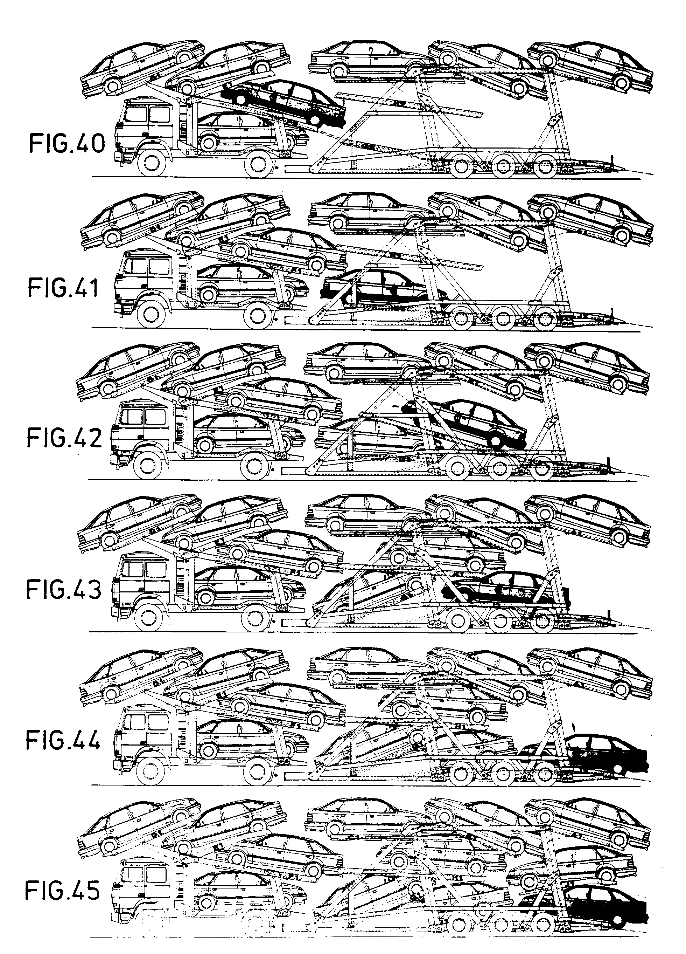

Le plateau I est monté basculant sur le châssis de remorque entre une position relevée dans laquelle il participe à la constitution de la rampe d'accès principale et dans laquelle il reçoit son chargement et une position escamotée par baculement vers l'avant comme représenté sur les figures 44 et 45.

Les mécanismes de commande en mouvements des plateaux individuels permettent une grande variété de mouvements. Seuls ceux nécessaires au chargement et à la mise en place automatique des plateaux pour que le chargement entre dans le gabarit routier sont exploités ici.

Dans une configuration de fonctionnement, certains plateaux intermédiaires adoptent une présentation adaptée en position et en inclinaison pour constituer plusieurs rampes d'accès.

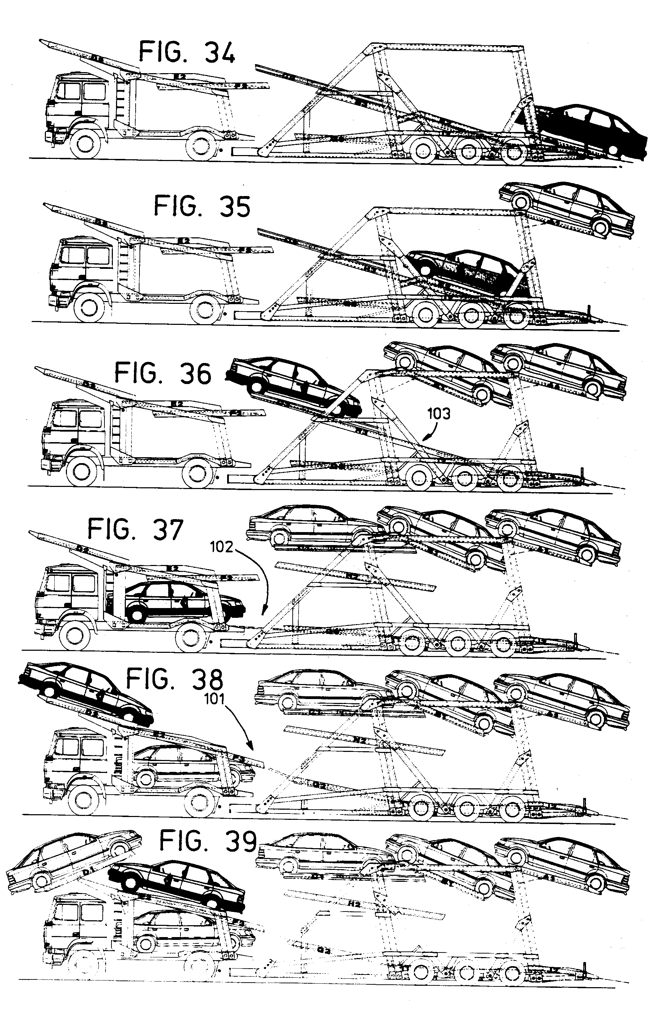

Il s'agit d'abord d'une rampe principale d'accès 101 continue et fractionnable d'une extrémité à l'autre du convoi formée par les plateaux D, E, F, G, I et J disposés en succession (figure 38) afin de permettre, notamment, l'accès direct de la voiture la plus éloignée c'est à dire celle supportée par le plateau D au dessus de la cabine du camion mais aussi des autres voitures supportées par les plateaux constituant cette rampe.

Dans ce convoi, il existe également d'autres rampes d'accès formées avec des plateaux.

Il convient de noter une rampe inférieure 102 constituée des plateaux J, I, et G menant au plan inférieur porteur de camion (figure 37) et une rampe annexe 103 formée des plateaux J, I, et H menant au plateau C (figure 36).

Ces caractéristiques apparaissent mieux à l'observation des figures de 34 à 45.

L'actionnement des plateaux en déplacement provient de moteurs hydrauliques ou électriques tels que 104 communs aux deux vis motrices 5 et 6 de chaque ensemble unitaire porteur. La force est transmise à un axe transversal 105 aboutissant à deux boîtes de renvoi de mouvement telles que 106 et 107 disposées chacune en regard à l'une ou l'autre extrémité de chaque vis d'un même ensemble moteur.

Chaque moteur 104 est alimenté pendant la durée correspondant à la séquence de fonctionnement dans le programme de l'automate chargé de gérer le fonctionnement d'ensemble, programme adaptable aux disparités du chargement.

On examinera maintenant la commande générale de fonctionnement permettant l'automatisation complète des phases de chargement et de déchargement.

Comme indiqué, la force motrice permettant l'actionnement des vis et le déplacement corrélatif du plateau correspondant provient de moteurs hydrauliques ou électriques alimentés par une source d'énergie et commandé en fonctionnement par un automate 108 ou un programmateur selon un programme de fonctionnement modifiable.

On adoptera ci-après comme exemple celui des moteurs hydrauliques 104 alimentés à partir d'une source 109 de fluide comprimé, par exemple une pompe avec accumulateur ou non ou le groupe hydraulique du camion.

Le schéma d'ensemble est celui représenté sur la figure 10. Il comprend un boîtier de commande 110 situé par exemple à l'extrémité arrière de la remorque relié à l'automate programmé 108 commandant par deux liaisons multifilaires 111 et 112, un distributeur hydraulique 113 d'alimentation des moteurs hydrauliques 104 de rotation des vis 5 et 6. Les moteurs sont alimentés à partir de la source 109 de fluide sous pression, par exemple la pompe hydraulique du camion. Une signalisation, par exemple par deux voyants lumineux un vert 114 et l'autre rouge 115, disposés par exemple à l'extrémité arrière de la remorque, permet de visualiser l'état d'inhibition de l'automate 108 à toute nouvelle commande.

Le menu du programme s'affiche sur un écran, par exemple à cristaux liquides, accompagné d'un clavier permettant d'entrer dans l'unité centrale de l'automate 108 les caractéristiques du chargement.

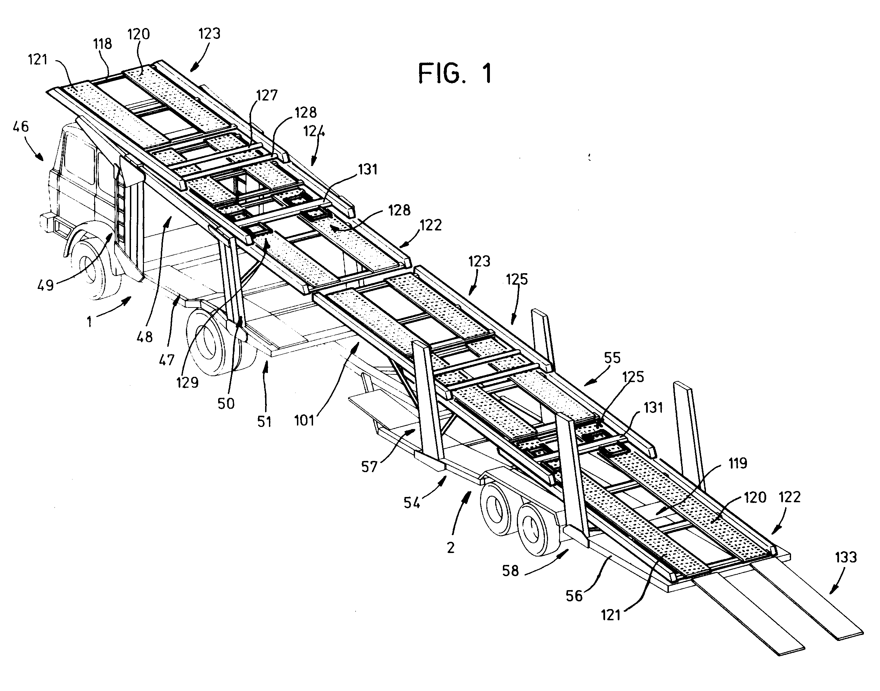

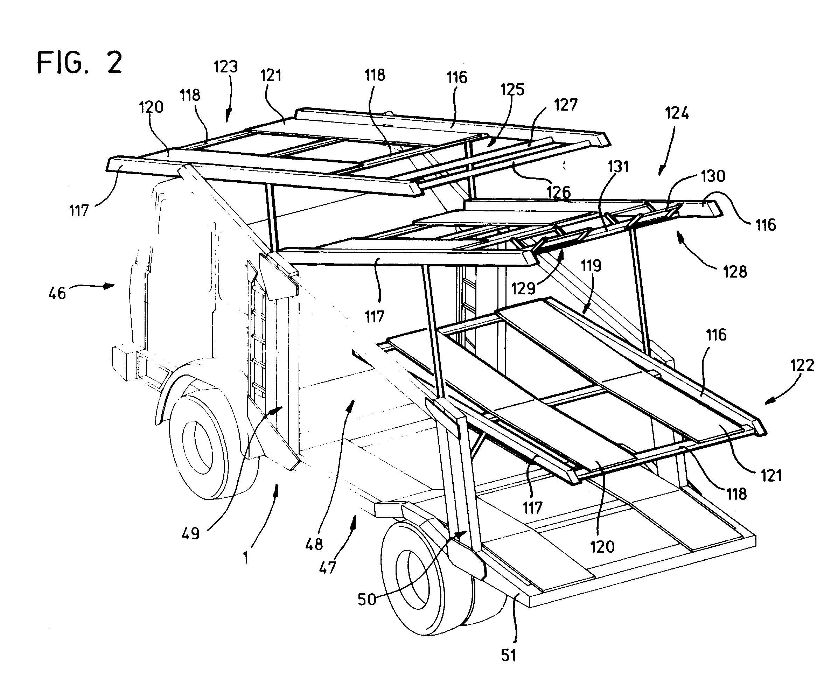

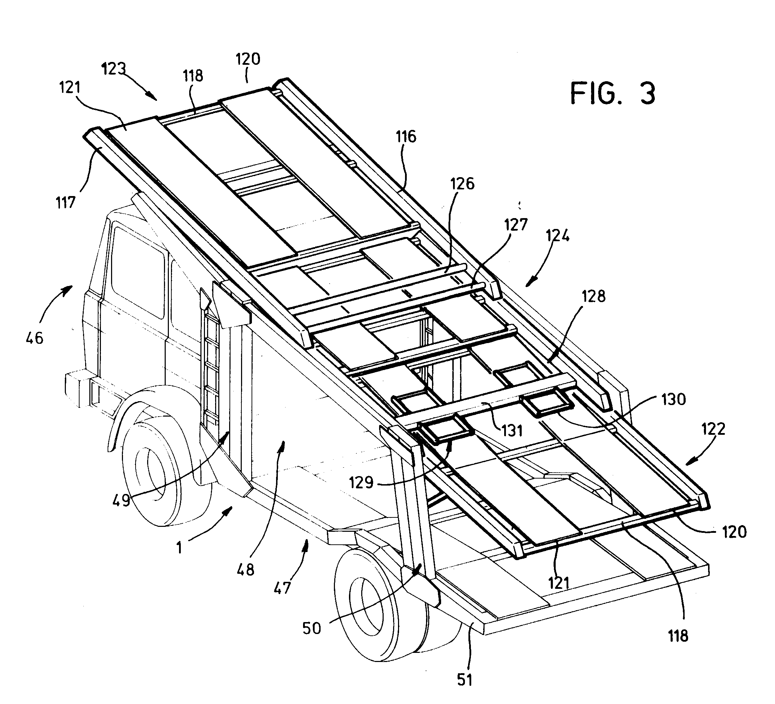

Les plateaux individuels utilisés dans le convoi articulé porte-voitures selon l'invention sont de préférence ceux représentés sur les figures 1, 2 et 3 car ils permettent d'exploiter au mieux les gains possibles en encombrement par utilisation de l'encastrement des voitures.

Ils se composent de deux longerons 116 et 117 reliés mécaniquement entre eux par plusieurs traverses telles que 118 supportant un platelage 119, par exemple, sous la forme de deux tôles perforées 120 et 121 correspondant aux deux lignes de roulage des voitures transportées.

On distingue trois types de plateaux : les plateaux simples 122 à platelage continu, les plateaux à encastrement 123, et les plateaux 124 à cales intégrées.

Les deux dernières catégories présentent une longueur de platelage réduite et une zone avant d'immobilisation 125 du train avant ou arrière de roues des voitures transportées. Cette zone est équipée par exemple de deux barres transversales d'extrémité 126 et 127 destinées à réaliser le calage pour les roues avant ou arrière ou équipé par exemple de deux cales 128 et 129 sous la forme chacune de deux cadres tels que 130 se développant en deux versants opposés de part et d'autre d'une barre transversale unique 131.

Les plateaux individuels sont amenés à constituer par juxtaposition ou chevauchement-alignement dans deux configurations de fonctionnement la rampe d'accès oblique 101 et la rampe inférieure 102 par la juxtaposition des plateaux inférieurs I et J en partie basse.

Afin de coordonner les différentes étapes de fonctionnement et d'autoriser le passage d'une étape à la suivante, on prévoit sur chaque vis ou plateau au moins un capteur tel que 132 : micro-interrupteur ou contact de fin de course, palpeur, détecteur ou autre élément analogue dont les signaux de détection permettent de valider la commande de l'étape de fonctionnement suivante.

On expliquera maintenant ci-après à l'aide des figures de 34 à 45 le fonctionnement du porte-voitures selon l'invention en se limitant aux différentes phases de chargement, les phases de déchargement se déduisant de celles-ci par ordre inverse.

Il s'agit du fonctionnement général commandé par l'automate 108.

Pour des raisons de clarté de la description du fonctionnement ci-après, les conventions de dessin et de références sont les suivantes:
. le numéro d'ordre des voitures est inscrit en chiffre romain dans une flèche portée sur la voiture,
. les plateaux sont référencés, comme déjà indiqué, par les lettres A, B,......I,J.,
. les lettres désignant les plateaux sont suivies d'un chiffre 1, 2, ou 3 destiné à indiquer leurs positions successives, le chiffre 1 désignant la position finale à l'état chargé, le chiffre supérieur 2 ou 3 l'autre position extrême correspondant en général à la position initiale de chargement, le chiffre 2 pour les lateaux comportant un chiffre 3 désigne une position intermédiaire.

Le convoi vient se placer sur l'aire de chargement. Après immobilisation, le chauffeur, qui représente la seule main d'oeuvre nécessaire au chargement, vient prédisposer la remorque et le camion et notamment les structures porteuses aux particularités éventuelles du chargement par la configuration du programme de l'automate.

Pour ce faire, il appelle au boîtier de commande 110 le programme et choisi dans le menu le sous-programme adapté à la particularité de son chargement. Il existe, en effet une variété suffisante de choix possibles dans le programme général pour configurer le programme selon les caractéristiques particulières du chargement à réaliser et plus généralement de tous les cas réels de chargement.

Le convoi est prêt à recevoir son chargement après configuration et validation du programme de chargement.

Le système moteur d'entraînement des plateaux est activé par l'une des premières commandes du programme. Egalement une des phases initiales consiste à vérifier puis à mettre éventuellement en position initiale tous les plateaux porteurs y compris le platelage arrière d'accès 133 permettant la montée sur la remorque à partir du sol.

Après mise en place du platelage arrière d'accès 133 constituant la rampe d'accès sur la remorque à partir du sol, la première voiture est placée sur le plateau A (figure 34).

On passe chaque fois à l'étape suivante dans le programme en commandant la suite du programme par action sur le boîtier 110 dès allumage du voyant vert de disponibilité et de signal de fin d'étape provenant de la prise en compte par l'automate des signaux de détection provenant des capteurs 132 ou de leur circuit associé.

La commande suivante provenant de l'automate consiste à monter le plateau A chargé de la première voiture en position de roulage c'est à dire supérieure inclinée référencée A1.

A la fin de chaque étape il y a lieu de commander à nouveau l'automate au boîtier pour le déroulement de l'étape suivante.

La deuxième voiture monte sur la remorque et progresse jusqu'à son emplacement sur le plateau B par la petite rampe d'accès formée par le plateau J en position basse (figure 35).

La commande appropriée sur le moteur correspondant fait monter le plateau B et sa charge constituée par la deuxième voiture jusqu' en position B1 de transport détectée par le capteur correspondant.

La troisième voiture accède au plan C en position inclinée par la rampe formée par les plateaux J, I et H. Cette voiture est mise en place en marche arrière pour des raisons de nécessité d'encastrement de son capot sous l'avant de la deuxième voiture (figure 36).

Le plateau C monte et bascule vers l'horizontale pour se trouver à l'horizontale en position haute C1 de transport détectée par le capteur correspondant. La quatrième voiture vient se placer en marche arrière sur le plan support inférieur de camion en utilisant la rampe inférieure 102 formée par les plateaux J et G et éventuellement une passerelle accessoire (figure 37).

La cinquième voiture est mise en place en marche arrière pour des raisons de gabarit routier et d'encombrement en utilisant la rampe d'accès oblique principale 101 constituée par la succession des plateaux J, I, G, F, E et D en positions convenablement inclinées telles que commandées par l'automate, pour réaliser une pente continue qui sera empruntée par les trois véhicules suivants et en premier par la cinquième voiture qui vient se placer en fin de rampe sur le plateau D (figure 38).

Le plateau D est ensuite incliné en position de roulage D1 détectée par le capteur correspondant, tandis que la sixième voiture accède à sa position sur le plateau E par la même rampe 101 (figure 39).

Le plateau E est basculé vers l'avant afin que la partie avant de la voiture qu'il porte vienne s'encastrer sous la voiture voisine portée par le plateau D alors que la septième voiture est mise en place sur le plateau F en utilisant toujours la même rampe d'accès 101 (figure 40).

Après basculement du plateau F vers le haut pour le mettre en position de roulage F1, la structure camion porte-voitures est entièrement chargée et configurée pour le roulage.

Le plateau G est ensuite abaissé pour recevoir en marche arrière la huitième voiture et se trouve, dans cette configuration, en position intermédiaire G3 (figure 41).

Le plateau H reçoit ainsi la neuvième voiture par la portion restante de la rampe d'accès formée par les plateaux J, I, et H (figure 42).

Le plateau H est ensuite relevé et ramené en position de roulage presque jusqu'à l'horizontale en position H1, détectée par le capteur correspondant, permettant à la voiture portée de venir s'encastrer parfaitement sous les deux voitures adjacentes supérieures tandis que le plateau G est basculé vers l'avant pour les mêmes raisons d'encastrement et que le plateau I reçoit la dixième voiture (figure 43).

Le plateau I bascule vers l'avant pour permettre à la voiture portée de venir s'encastrer sous les voitures portées par les plateaux G et H alors que suit le chargement de la onzième voiture sur le plateau J en position basse J2 (figure 44).

Le plateau J s'élève et bascule légèrement vers l'avant pour venir occuper sa position de roulage J1 et la dernière voiture est montée sur le plateau fixe arrière de remorque occupant l'espace libre entre le châssis et la position relevée du plateau J.

Le chargement se trouve alors en configuration de roulage, il suffit d'effectuer les opérations finales de sécurité : arrimage règlementaire, vérifications diverses et la commande de fin de programme à l'automate 108.

Le convoi porte-voitures selon la présente invention à été décrit en détail ci-dessus à propos d'une forme de base. Il est bien entendu toutefois que la protection s'étend à toutes les variantes directes et approchantes dérivant des moyens décrits sans apport inventif, ainsi qu'à toutes les modifications et substitutions simples et du domaine des équivalents.

## Revendications

1. Convoi articulé porte-voitures formé d'un camion attelé à une remorque (2) comprenant des plateaux individuels porteurs mobiles en mouvements composés de translation et d'inclinaison entre deux positions extrêmes correspondant à une position de transport et une position escamotée de roulage à vide, caractérisé en ce que :
. les structures porte-voitures de camion et de remorque sont constituées d'une pluralité d'ensembles unitaires porteurs formés chacun de poteaux adjacents de soutien et d'un ou plusieurs plateaux individuels porteurs mobiles en mouvements composés résultant de la combinaison d'un ou plusieurs mouvements de translation horizontale ou verticale, ou d'inclinaison ;
. lesdits ensembles unitaires commandant chacun le déplacement d'un seul plateau (9) à l'aide de deux vis (5) et (6) le long des poteaux adjacents de soutien (3) et (4), vis sur lesquelles sont montés des blocs (14, 15) reliés mécaniquement à chaque côté de chaque plateau porteur en vue de réaliser successivement les mouvements de chaque plateau ;
. lesdits plateaux étant mobiles depuis une position où ils constituent en phases de chargement et de déchargement plusieurs rampes d'accès de la plupart des véhicules de l'arrière du convoi jusqu'à leur position de transport, permettant ainsi d'effectuer des phases de chargement et de déchargement entièrement automatisées.

2. Convoi selon la revendication 1, caractérisé en ce que la structure porteuse de camion comporte deux ensembles unitaires porteurs doubles, l'un à l'avant (49) et l'autre (50) à l'arrière, ainsi qu'un plan porteur inférieur (51), et en ce que la structure porte-voitures de remorque comporte un ensemble porteur avant composite (57) et un ensemble unitaire double à l'arrière (58), ainsi qu'un plan porteur inférieur.

3. Convoi selon la revendication 2, caractérisé en ce que les différents ensembles unitaires porteurs formant l'ensemble composite (57) avant de remorque sont d'une part deux ensembles supérieurs manoeuvrés à partir du poteau central double, dont un premier ensemble de translation (73) et un ensemble de pivotement (74) commandant les plateaux supérieurs, et d'autre part un deuxième groupe formé d'un ensemble basculant (75) commandant les mouvements du plateau intermédiaire et d'un ensemble inférieur (76) commandant les mouvements du plateau inférieur articulés l'un et l'autre d'une part sur un poteau oblique antérieur (78) et d'autre part, pour le premier, sur un poteau oblique postérieur (79), et pour le second sur le premier poteau central, et en ce que les plateaux supérieurs sont reliés respectivement aux poteaux correspondants par deux écrous et une bielle télescopique d'une part et par deux écrous et une bielle de longueur fixe d'autre part, et en ce que les plateaux intermédiaires et inférieurs sont reliés chacun par l'une de leur extrémité à la vis du poteau oblique correspondant et au voisinage de leur autre extrémité à un point d'appui pivotant.

4. Convoi selon la revendication 2, caractérisé en ce que l'ensemble unitaire double avant est formé d'un premier ensemble actionnant le plateau supérieur avant, ensemble à simple écrou en raison du simple mouvement de pivotement de ce plateau présentant un axe de pivotement à environ mi-longueur porté par une prolongation de l'élément supérieur de liaison entre les poteaux, et d'un deuxième ensemble portant l'extrémité avant du plateau supérieur intermédiaire de camion, ce dernier plateau étant monté basculant sur le deuxième ensemble de soutien de l'ensemble double arrière par un écrou en prise sur la vis correspondante et par l'intermédiaire d'une bielle de longueur fixe articulée sur le premier ensemble de poteau arrière, le plateau supérieur arrière de camion étant relié par deux écrous montés sur les vis des poteaux adjacents par une liaison à basculement à triangle indéformable dont le sommet constitue une articulation se déplaçant à glissement le long des bords dudit plateau dont les extrémités sont montées sur un axe fixe de pivotement s'appuyant sur la liaison mécanique fixe supérieure entre les poteaux.

5. Convoi selon la revendication 1, caractérisé en ce que les plateaux (9) comportent un platelage (119) et une conformation avant permettant d'immobiliser le train avant de roulage de la voiture portée.

6. Convoi selon la revendication 5, caractérisé en ce que la conformation avant est un ensemble de deux barres transversales parallèles d'extrémité (126) et (127).

7. Convoi selon la revendication 5, caractérisé en ce que la conformation avant est un ensemble de deux cales (128) et (129) portées par une barre transversale (131), cales se composant de deux cadres tels que (130) inclinés, disposés en versants opposés.

## Claims

1. Articulated automobile carrier consisting of a truck (1) harnessed to a trailer (2) including individual carrying platforms movable in compound movements in translatory motion and inslope motion between two extreme positions corresponding to a transportation position and a retracted off-load traffic position, characterized in that :
. the automobile carrying structures of the truck and of the trailer are made up of a plurality of unit support structures, each formed by adjacent support posts and one or several individual carrying platforms movable in compound movements resulting from a combination of one or several movements in horizontal or vertical position, or in slope ;
. said unit support structures each controlling the displacement of a single platform (9) through two screws (5) and (6) along the adjacent support posts (3) and (4), screws on which are mounted blocks (14,15) linked mechanically on each side of each carrying platform with a view to effecting successively compound movements thereof ;
. said platforms being movable from a position in wich they make up several access ramps for most of the vehicles from the rear of the carrier up to their transportation position thus making it possible to effect totally automated loading and unloading phases.

2. Carrier in accordance with claim 1 characterized in that the truck carrying structure includes two unit carrying double assemblies one in the front (49) and the other (50) at the rear as well as a lower carrying platform (51) and in that the trailer carrying structure includes a forward composite carrying assembly (57) and a unit double assembly in the rear (58) as well as a lower carrying area.

3. Carrier in accordance with claim 2 characterized in that the various unit assemblies making up the forward composite assembly (57) of the trailer are, on the one hand, two upper assemblies maneuvered from the central double post, of which a first translation assembly (73) and a pivoting assembly (74) controlling the upper platforms, and on the other hand, a second group formed by a swinging assembly (75) controlling the movements of the intermediate platform and of a lower assembly (76) controlling the movements of the lower platform, each articulated on the one hand on a forward oblique post (78) and on the other hand, for the first on an oblique rear post (79), and for the second on the first central post, and in that the upper platforms are linked respectively to the corresponding posts by two nuts and a telescopic rod on the one hand and by two nuts and a fixed length rod on the other hand, and in that the intermediate and lower platforms are linked each by one ot their ends to the screw of the corresponding oblique post and in the neighborhood of their other end to a pivoting support point.

4. Carrier in accordance with claim 2 characterized in that the forward double unit assembly is made up of a first assembly actuating the forward upper platform, an assembly with simple nut due to the simple pivoting movement of this platform presenting a pivoting axis at about mid-length borne by a lengthening of the upper linking element between the posts and of a second assembly bearing the forward end of the upper intermediate platform of the truck, this latter platform being mounted swinging on the second support assembly of the rear double assembly by a nut fastened on the correpsonding screw and through a fixed length rod articulated on the first assembly of the rear post, the upper rear platform of the truck being linked by two nuts mounted on the screws of the adjacent posts through a swinging linkage in the form of a fixed triangle the peak of which makes up an articulation displacing itself through sliding along the edges of the said platform the ends of which are mounted on a fixed pivoting axis supported by the fixed upper mechanical linkage between the posts.

5. Carrier in accordance with claim 1 characterized in that the platforms (9) include a floor (119) and a forward structure making it possible to immobilize the front wheel of the automobile carried.

6. Carrier in accordance with claim 5 characterized in that the forward structure is an assembly of two end transversal parallel bars (126) and (127).

7. Carrier in accordance with claim 5 characterized in that the forward structure is an assembly of two blocks (128) and (129) borne by a transversal bar (131), blocks made up of two frames such as (130), sloped, arranged on opposite surfaces.

## Patentansprüche

1. Lastzug als Fahrzeugtransporter mit einem Lastkraftfahrzeug und einem angekuppelten Anhänger (2) mit einzelnen Ladebrücken, die in einer aus einer Translations-und einer Neigungsbewegung zusammengesetzten Bewegung zwischen zwei Endstellungen beweglich sind, die einer Transportstellung und einer abgesenkten Stellung zum Leerfahren entsprechen, dadurch gekennzeichnet, daß
- die Fahrzeugtragwerke des Lastkraftfahrzeugs und des Anhängers aus einer Vielzahl einheitlicher Trageinheiten bestehen, die jeweils durch benachbarte Tragstützen und eine oder mehrere einzelne Ladebrücken gebildet sind, die in einer aus einer oder mehreren horizontalen oder vertikalen Translations-oder Neigungsbewegungen zusammengesetzten Bewegung beweglich sind;
- jede der einheitlichen Trageinheiten die Verlagerung einer einzigen Ladebrücke (9) mit Hilfe zweier Spindeln (6,7) entlang benachbarter Tragstützen (3,4) steuert, wobei auf den Spindeln Blöcke (14,15) befestigt sind, die mechanisch mit jeder Seite jeder Ladebrücke verbunden sind, um nacheinander die Bewegungen jeder Ladebrücke zu bewirken;
- die Ladebrücken aus einer Stellung, wo sie in den Phasen des Beladens und Entladens mehrere Auffahrtsrampen für den Großteil der Fahrzeuge vom hinteren Teil des Lastzugs aus bilden, bis in ihre Transportstellung bewegbar sind, um so vollständig automatisierte Be-und Entladungsphasen zu ermöglichen.

2. Lastzug nach Anspruch 1, dadurch gekennzeichnet, daß der Tragrahmen des LKWs zwei einheitliche Doppeltrageinheiten, eine am vorderen Teil (49), die andere am Heck (50), sowie einen ebenen, unteren Träger (51) aufweist und daß das Fahrzeugtragwerk des Anhängers eine vordere zusammengesetzte Trageinheit (57) und eine einheitliche Doppeltrageinheit am Heck (58) sowie einen ebenen, unteren Träger aufweist.

3. Lastzug nach Anspruch 2, dadurch gekennzeichnet, daß die verschiedenen einheitlichen Trageinheiten, die die vordere zusammengesetzte Trageinheit (57) des Anhängers bilden, einerseits zwei von den zentralen Doppelstützen betätigte obere Einheiten, von denen eine erste Translationseinheit (73) und eine Schwenkeinheit (74) die oberen Ladebrücken steuern, andererseits eine zweite Gruppe bilden, die aus einer die Bewegungen der mittleren Ladebrücke steuernden Kippeinheit (75) und einer die Bewegungen der unteren Ladebrücke steuernden Einheit (76) gebildet ist, die beide einerseits an einer vorderen geneigten Stütze (78), andererseits zum einen an einer geneigten hinteren Stütze (79), zum anderen an der ersten zentralen Stütze gelagert sind, und daß die oberen Ladebrücken mit den entsprechenden Stützen mittels zweier Muttern und einem Teleskoplenker einerseits und mittels zweier Muttern und einem Lenker fester Länge andererseits verbunden sind, und daß die mittleren und unteren Ladebrücken jeweils mit ihrem einen Ende mit der Spindel der entsprechenden geneigten Stütze und nahe ihrem anderen Ende mit einem schwenkbaren Auflager verbunden sind.

4. Lastzug nach Anspruch 2, dadurch gekennzeichnet, daß die einheitliche vordere Doppeltrageinheit aus einer die obere vordere Ladebrücke betätigenden ersten Einheit mit einer einfachen Mutter zur Erreichung einer einfachen Schwenkbewegung dieser Ladebrücke, die eine von einer Verlängerung des oberen Elementes der Verbindung der Stütze getragene Schwenkachse etwa mittlerer Länge bildet, und einer das vordere Ende der oberen mittleren Ladebrücke des LKWs tragenden Einheit gebildet ist, wobei letztere Ladebrücke der zweiten Halteeinheit der Doppeltrageinheit mittels einer auf der entsprechenden Spindel sitzenden Mutter kippbar und unter Zwischenschaltung eines Lenkers fester Länge an der ersten Einheit der hinteren heckseitigen Stütze schwenkbar angebracht ist, während die obere heckseitige Ladebrücke des LKWs mittels zweier Muttern mit den Spindeln der benachbarten Stützen über eine Kippverbindung mit einem unverformbaren Dreieck verbunden ist, dessen Scheitel ein längs der Ränder der Ladebrücke gleitend verlagerbares Gelenk bildet, deren Enden an einer festen, sich auf der oberen festen mechanischen Verbindung der Stützen abstützenden Schwenkachse angebracht sind.

5. Lastzug nach Anspruch 1, dadurch gekennzeichnet, daß die Ladebrücken (9) eine Bühne (119) und eine vordere Einrichtung aufweisen, um ein Festsetzen des vorderen Fahrgestells des aufgenommenen Fahrzeugs zu ermöglichen.

6. Lastzug nach Anspruch 5, dadurch gekennzeichnet, daß die vordere Einrichtung eine Einheit von zwei parallelen, querverlaufenden Endstangen (126) und (127) ist.

7. Lastzug nach Anspruch 5, dadurch gekennzeichnet, daß die vordere Einrichtung eine Einheit von zwei Radfallen (128) und (129) ist, die von einer Querstange (131) getragen sind, wobei die Radfallen aus zwei beispielsweise geneigten, entgegengesetzt angeordneten Rahmen (130) bestehen.
